# EUROPÄISCHE PATENTSCHRIFT

(11) **EP 1 262 262 B1**
(45) Veröffentlichungstag und Bekanntmachung des Hinweises auf die Patenterteilung: **22.04.2009**
(21) Anmeldenummer: 02011227.2
(22) Anmeldetag: 22.05.2002
(51) Int. Cl.: B23B 27/04

(54) **Bohrstange**
Boring bar
Barre d'alésage

(30) Priorität: 29.05.2001 DE 10126043
(43) Veröffentlichungstag der Anmeldung: 04.12.2002
(73) Patentinhaber: Hartmetall-Werkzeugfabrik Paul Horn GmbH, 72072 Tübingen (DE)
(72) Erfinder: Oettle, Matthias, 72585 Riederich (DE)
(74) Vertreter: Keck, Stephan

(56) Entgegenhaltungen:
- EP-A- 0 526 438
- EP-A- 0 767 023
- WO-A-94/21408
- WO-A-98/57769
- US-B1- 6 186 704

## Beschreibung

Die Erfindung bezieht sich auf eine Bohrstange mit einem eine Werkzeuglängsachse definierenden Schaft und mit einem als Träger einer Schneidplatte dienenden Kopf, mit an diesem und am Schaft ausgebildeten Anlageflächen, mit einer Halteeinrichtung zum lösbaren Andrücken der Anlageflächen des Kopfes an diejenigen des Schaftes, mit einer zum lösbaren Festlegen der Schneidplatte dienenden Spanneinrichtung mit einer Klemmbacke, die eine einen Teil der Anlageflächen des Kopfes bildende Abstützfläche aufweist.

Um bei der Benutzung derartiger Bohrstangen hohe Schneidleistungen bei Einhaltungen engster Toleranzen sowie eine hohe Güte der bearbeiteten Oberflächen zu erzielen, sind an die einwandfreie und sichere Lagerung der Schneidplatte, und damit an die Lagesicherung des Kopfes an der Bohrstange, sehr hohe Anforderungen zu stellen. Bei handelsüblichen Bohrstangen sind an Kopf und Schaft miteinander zusammenwirkende Anlageflächen ausgebildet, die mittels einer Halteeinrichtung aneinander andrückbar sind. Eine als lösbare Halteeinrichtung dienende Verschraubung stellt hierbei einen ausreichend hohen Anpressdruck zur Verfügung.

Die Schneidplatte ihrerseits, beispielsweise in Form einer Wendeschneidplatte, ist üblicherweise mittels einer Spanneinrichtung am Kopf sicherbar, die eine Klemmbacke aufweist, die in eine Spannstellung drängbar ist, in der sie die Schneidplatte mit großer Spannkraft in einen Sitz preßt.

Um sicher zu stellen, dass die Schneidplatte gegen die angreifenden Zerspanungskräfte sicher abgestützt und schwingungsfrei gehalten ist, ist es von Vorteil, wenn auch die Klemmbacke selbst einen Teil der Anlageflächen des Kopfes bildet, so dass auch die Klemmbacke bei ihrer Spann- und Freigabebewegung an einer ihr zugekehrten Anlagefläche des Schaftes geführt und somit abgestützt ist.

Aufgrund der zwischen den Anlageflächen von Kopf und Schaft wirkenden, durch die Halteeinrichtung erzeugten Andrückkräfte, ergibt sich jedoch ein Problem beim Schneidplattenwechsel, weil beim Lösen der Spanneinrichtung keine Freigabebewegung der Klemmbacke erfolgt, da die durch die Halteeinrichtung erzeugten Andrückkräfte die Klemmbacke in der SpannStellung blockieren. Zum Schneidplattenwechsel ist es daher erforderlich, den Kopf durch Lösen der Halteeinrichtung vom Schaft abzunehmen oder zumindest den Sitz des Kopfes zu lockern.

Durch die DE-A-195 21 599 ist eine Ausbohrstange zur Feinstbearbeitung einer Bohrungsoberfläche bekannt mit einem in die Umfangsfläche der Ausbohrstange einbringbaren Einsatz, der mindestens eine von einer Spannpratze gehaltene Messerplatte zur Bearbeitung einer Bohrungsoberfläche aufweist, wobei sich die bekannte Lösung insbesondere dadurch auszeichnet, daß eine die Verjüngung der Messerplatte beeinflussende Einstellvorrichtung vorgesehen ist. Dabei kann die Neigung der Schneide durch die Einstellvorrichtung beeinflußt werden, indem die Schneide aus dem Halter ein- und ausschiebbar geführt ist. Zum Freigeben der Schneidplatte in Form der Messerplatte wird die Spannpratze über eine Schraubverbindung von der Halteeinrichtung gelöst und wegbewegt, wobei die Spannpratze im übrigen an ihrem vorderen freien Ende nur punktuell oder in der Art einer Linienführung an der Schneidplatte angreift. Die dahingehende Ausgestaltung einer Ausbohrstange ist demgemäß besonders empfindlich gegenüber Schwingungseinleitungen der Schneidplatte bei spanenden Bearbeitungsverfahren. Des weiteren ist ein Wechsel der Schneidplatte bei Verschleiß nur mit entsprechend hohem zeitlichen Aufwand möglich, was die bekannte Vorrichtung teuer im Arbeitseinsatz werden läßt.

Die DE-C-40 24 096 zeigt einen Werkzeughalter mit einem Schneideinsatz, insbesondere Mini - Bohrstange, für die spanabhebende Metallbearbeitung. Der das Werkzeug aufnehmende Kopf des Werkzeughalters ist an seinem freien Ende mit einer Klemmhalterung für das aufzunehmende Werkzeug versehen, wobei der obere bewegbar gehaltene Teil des Kopfes als Klemmbacke fungiert. Die Klemmbacke ist an ihrem festen Ende einteilig mit dem Kopf verbunden. Das Öffnen der Klemmbacke zum Aufnehmen einer Schneidplatte an ihrem freien Ende erfolgt durch elastische Verformung der Klemmbacke mit Hilfe eines dafür vorgesehenen Aufspreizdornes in der Art einer Einschraubhilfe. Die Fixierung einer aufzunehmenden Schneidplatte geschieht einerseits reibungsgebunden über die elastische Rückstellkraft der Klemmbacke, andererseits sind die mit dem Werkzeughalter in Kontakt tretenden Außenflächen der aufzunehmenden Schneidplatte so angelegt, daß sie nicht parallel zueinander sind und derart der Schneidplatte eine Keilform verleihen, die eine Selbsthemmung der Schneidplatte im Werkzeughalter bewirken.
Eine derartige Ausgestaltung des Werkzeughalters und der Schneidplatte erlaubt einen Wechsel der Schneidplatte auf einfache Weise mit Hilfe des zugehörigen Aufspreizdornes. Aufgrund der Keilförmigkeit der Schneidplatte muß für einen Wechsel derselben die Klemmbacke relativ weit geöffnet werden. Dies ist ohne großen Aufwand nur möglich, wenn die Klemmbacke keine sehr große Steifigkeit besitzt und derart die dahingehende elastische Verformung zuläßt. Die Konstruktion weist aus diesem Grunde bezüglich der Schneidplatte keine sehr große Haltekraft auf und ist mithin auch schwingungsanfällig. Des weiteren besteht die Gefahr, daß im Laufe der Zeit die Haltekraft allmählich geringer wird durch einen Verlust der Klemmbacke an Elastizität.

Aus der WO 94/21408 A1 ist ein Schneidplattenhalter bekannt, der mittels Schrauben seitlich an einem Halter angebracht ist. Der Schneidplattenhalter weist eine Klemmbacke auf, die durch einen Schlitz definiert ist und mittels der eine Schneidplatte geklemmt in einer Schneidplattenaufnahme gehalten werden kann. Diese Aufnahmeöffnung ragt vollständig über den Halter hinaus.

Der Erfindung liegt daher die Aufgabe zugrunde, die beschriebenen Nachteile vermeiden zu helfen, indem eine Bohrstange zur Verfügung gestellt wird, bei der die einwandfreie Lagesicherung der Schneidplatte gewährleistet ist, trotzdem jedoch ein Schneidplattenwechsel auf einfache und bequeme Weise ermöglicht ist.

Erfindungsgemäß löst diese Aufgabe eine Bohrstange mit den Merkmalen des Patentanspruches 1 in seiner Gesamtheit. Dadurch, daß gemäß dem kennzeichnenden Teil des Patentanspruches 1 die Abstützfläche bei der Spann- und Freigabebewegung der Klemmbacke an einer ihr zugekehrten Anlagefläche des Schaftes geführt ist und eine Vertiefung aufweist, die zur Verringerung der Größe der Berührungsfläche zwischen der zugeordneten Anlagefläche des Schaftes und der Abstützfläche der Klemmbacke in diese, an die Abstützfläche angrenzend und die zugeordnete Anlagefläche des Schaftes nicht berührend, eingearbeitet ist, lassen sich die vorstehend beschriebenen Nachteile sicher ausschließen.

Dadurch, daß erfindungsgemäß die Klemmbacke nicht vollflächig an der zugekehrten Fläche des Schaftes anliegend geführt ist, sondern nur mit ihrer Abstützfläche unter der von der Halteeinrichtung erzeugten Andrückkraft an der Anlagefläche des Schaftes anliegt, ist die Gefahr vermieden, dass zwischen Schaft und Klemmbacke wirkende Reibungskräfte die Klemmbacke in ihrer Spannstellung blockieren, so dass trotz Lösen der Spanneinrichtung keine Freigabebewegung der Klemmbacken erfolgen würde. Trotz der durch die Verringerung der Größe der Berührungsfläche erreichten, günstigeren Reibungsverhältnisse ist die Klemmbacke über ihre Abstützfläche jedoch an der zugeordneten Anlagefläche des Schaftes einwandfrei geführt und gegen die über die Schneidplatte eingeleiteten Zerspanungskräfte sicher und schwingungsfrei abgestützt. Trotz der erreichten Vereinfachung des Schneidplattenwechsels, der ohne Lösen der Halteeinrichtung des Kopfes durchgeführt werden kann, wird die erfindungsgemäße Bohrstange daher den zu stellenden Anforderungen hinsichtlich Schneidleistung und Bearbeitungsgüte voll gerecht.

Vorzugsweise besitzt die Vertiefung eine sehr geringe Tiefe, d. h. der Boden der Vertiefung ist gegenüber der Ebene der abgrenzenden Abstützfläche nur geringfügig zurückgesetzt, beispielsweise um weniger als 2 mm, vorzugsweise nur einen Bruchteil eines Millimeters.

Nachstehend ist die Erfindung anhand eines in der Zeichnung dargestellten Ausführungsbeispieles im einzelnen erläutert. Es zeigen:
- Fig. 1: eine perspektivische Ansicht einer Bohrstange gemäß einem Ausführungsbeispiel der Erfindung;
- Fig. 2 und 3: gegenüber Fig. 1 in größerem Maßstab gezeichnete, perspektivische Ansichten nur des Kopfes der Bohrstange von Fig. 1, ohne eingesetzte Schneidplatte, wobei die Rückseite des Kopfes in Fig. 2 bzw. die Vorderseite des Kopfes in Fig. 3 sichtbar sind, und
- Fig. 4: eine im Abbildungsmaßstab den Fig. 2 und 3 entsprechende Draufsicht des Kopfes ohne Schneidplatte.

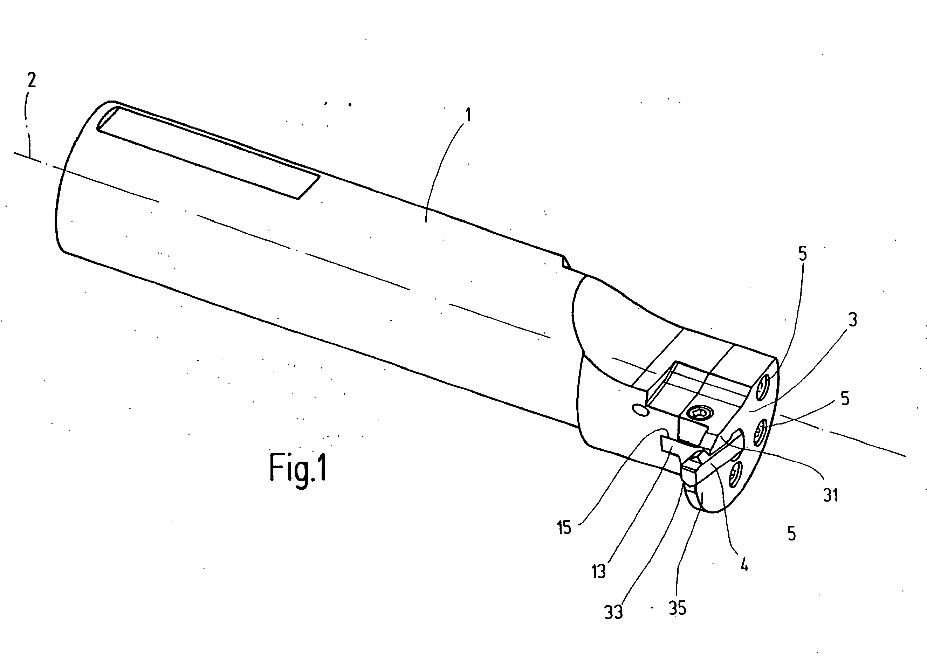

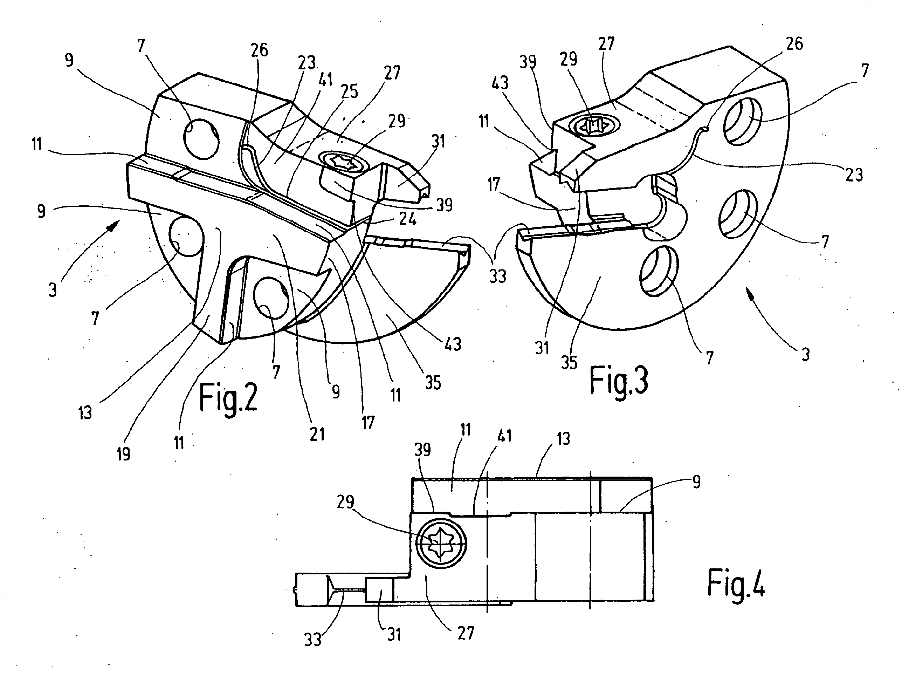

Fig. 1 zeigt ein Ausführungsbeispiel die Bohrstange mit einem Schaft 1 und einem an dessen vorderem Ende angebrachten Kopf 3, in dem eine Schneidplatte 4 eingespannt ist, bei der es sich beim Ausführungsbeispiel um eine Hartmetall- Wendeschneidplatte handelt. Die Fig. 2 bis 4 zeigen den Kopf 3 jeweils ohne Schneidplatte. Eine Verschraubung mit nur in Fig. 1 gezeigten Befestigungsschrauben 5, die Durchgangsbohrungen 7 im Kopf 3 durchgreifen, dient als Halteeinrichtung für die abnehmbare Anbringung des Kopfes 3 am Schaft 1. Durch die von der Verschraubung erzeugte Anpresskraft werden ebene Anlageflächen 9 des Kopfes 3 an zugeordnete Anlageflächen des Schaftes 1 angedrückt. Die Anlageflächen 9 des Kopfes 3 und die zugeordneten, durch vordere Stirnflächen gebildeten Anlageflächen des Schaftes 1 liegen, bezogen auf die durch den Schaft 1 definierte Werkzeuglängsachse 2, in einer Radialebene.

Weitere Anlageflächen 11, die zu den in einer Radialebene liegenden Anlageflächen 9 senkrecht verlaufen, sind am Kopf 3 an einem Profilkörper 13 ausgebildet, der am Kopf 3 aus der Ebene der Anlageflächen 9 axial (bezogen auf die Werkzeuglängsachse 2) nach rückwärts vorspringt. Der Profilkörper 13 ist, wie aus Fig. 1 entnehmbar ist, am vorderen Ende des Schaftes 1 in einem eingearbeiteten Sitz 15 passend aufgenommen. Somit ist der Kopf 3 bei festgezogener Verschraubung mittels der Schrauben 5 am Schaft 1 sowohl gegen Axialkräfte durch die Anlageflächen 9 als auch gegen Radial -und Torsionskräfte mittels der Anlageflächen 11 des Profilkörpers 13 sicher festgelegt.

Der Kopf 3 weist einen in seiner Kontur an die Formgebung des vorderen Endes des Schaftes 3 angepassten Grundkörper 17 auf, der von den Durchgangsbohrungen 7 durchzogen ist. An der dem Schaft 1 zugewandten Seite des Grundkörpers 17 befindet sich der axial vorspringende Profilkörper 13, der näherungsweise die Form eines T-Profils mit Fußbalken 19 und Querbalken 21 besitzt. Oberhalb des Querbalkens 21 ist im benachbarten Teil des Grundkörpers 17 ein Schlitz 23 ausgebildet. Dieser erstreckt sich von seinem am Umfang des Grundkörpers 17 gelegenen, äußeren Ende 24 ausgehend zunächst längs der Oberseite des Querbalkens 21 geradlinig bis zum Zentralbereich des Grundkörpers 17 und erstreckt sich sodann in gekrümmtem Verlauf in die Nähe des Außenrandes des Grundkörpers 17. Da sich der Schlitz 23 über die gesamte axiale Stärke des Grundkörpers 17 erstreckt, also eine seitliche Mündung an der vorderen Stirnfläche des Kopfes 3 sowie eine seitliche Mündung 25 auf der Seite der Anlageflächen 9 besitzt, wird durch den Schlitz 23 eine auskragende, nur an ihrem inneren Ende 26 mit dem restlichen Teil des Grundkörpers 17 zusammenhängende Klemmbacke 27 gebildet. Da das innere Ende 26 des Schlitzes 23 dem äußeren Rand des Grundkörpers 17 angenähert ist, lässt sich die Klemmbacke 27 somit aus der in den Fig. 2 und 3 gezeigten Freigabestellung unter Verringerung der lichten Weite des Schlitzes 23 in eine Spannstellung drängen. Zu diesem Zweck durchgreift eine Spannschraube 29 in der Nähe des äußeren Endes 24 des Schlitzes 23 die Klemmbacke 27.

Die Klemmbacke 27 ist an der Stirnseite des Kopfes 3 durch einen weiter auskragenden Backenteil 31 verlängert. Dieser dient als Spannpratze, die durch Anlage an der Oberseite einer Schneidplatte 4 diese in einen Sitz 33 an einem Widerlager 35 drückt, das durch eine, bezogen auf die Werkzeuglängsachse 2, radiale Erweiterung des Grundkörpers 17 ausgebildet ist. Die miteinander zusammenwirkenden Klemmflächen am Backenteil 31 und am Sitz 33 des Widerlagers 35 weisen die für Wendeschneidplatten übliche Profilierung der Spannflächen, angepasst an die Formgebung der Außenflächen der zu verwendenden, standardisierten Wendeschneidplatten, auf. Durch Festziehen der Spannschraube 29, was zu einer Spannbewegung der Klemmbacke 27 und des Backenteiles 31 unter Verkleinerung der lichten Weite des Schlitzes 23 führt, wird somit eine betreffende Schneidplatte 4 in ihrer Arbeitsstellung festgespannt, siehe Fig. 1.

Die Klemmbacke 27 weist im Bereich der Spannschraube 29 auf der Seite der Anlageflächen 9 eine mit diesen in gleicher Ebene liegende Abstützfläche 39 auf. Diese bildet den der Klemmbacke 27 zugehörigen Teil der Anlageflächen des Kopfes 3 am Schaft 1. Die diese Abstützfläche 39 umgebende Fläche an der Klemmbacke 27 bildet nicht Teil dieser Anlageflächen. Vielmehr ist diese gesamte, an die Abstützfläche 39 angrenzende Fläche der Klemmbacke 27 zurückgesetzt, indem eine Vertiefung 41 ausgebildet ist, die sich über die gesamte an die Abstützfläche 39 angrenzende Fläche der Klemmbacke 27 und im Bereich des inneren Endes 26 des Schlitzes 23 noch über diesen hinaus erstreckt. Die Vertiefung 41 besitzt eine sehr geringe Tiefe, die lediglich so groß gewählt ist, dass die Klemmbacke 27 nur über die Abstützfläche 39 am Schaft 1 anliegt, wenn der Kopf 3 am Schaft 1 mittels der als Halteeinrichtung dienenden Verschraubung festgespannt ist. Der am vorderen Ende der Klemmbacke 27 vom Übergang zwischen Abstützfläche 39 und Vertiefung 41 gebildete Absatz 43 ist in Fig. 2 und 3 zur Verdeutlichung mit übertrieben großer Stufenhöhe zeichnerisch dargestellt. Zweck der Vertiefung 41 ist lediglich zu erreichen, dass bei am Schaft 1 angebrachtem Kopf 3 die Klemmbacke 27 bei Bewegungen zwischen Spann- und Freigabestellung nicht vollflächig, sondern nur an der Abstützfläche 39 geführt ist. Trotz der durch die Halteeinrichtung (Befestigungsschrauben 5) erzeugten hohen Andrückkräfte zwischen Schaft 1 und Anlageflächen 9 des Kopfes 3 ergibt sich daher aufgrund der erzeugten Reibungskräfte keine so starke Hemmung, dass Spann- und Freigabebewegungen der Klemmbacke 27, bei denen die Klemmbacke 27 lediglich über die Abstützfläche 39 an der zugehörigen Anlagefläche des Schaftes geführt ist, verhindert würden. Somit ist sichergestellt, dass bei einem beabsichtigten Schneidplattenwechsel durch Lösen der Spannschraube 29 eine durch die Elastizitätskräfte des Kopfes 3 bewirkte Freigabebewegung der Klemmbacke 27 zustande kommt, so dass ein Schneidplattenwechsel durchgeführt werden kann, ohne dass die den Kopf 3 am Schaft 1 festlegende Halteeinrichtung gelöst werden müsste, das heißt ein Lösen der Befestigungsschrauben 5 erforderlich wäre.

Gleichwohl ist die Klemmbacke 27 über die einen Teil der Anlageflächen bildende Abstützfläche 39 am Schaft 1 in erforderlicher Weise abgestützt, da die im Betrieb auftretenden Axialkräfte über die Abstützfläche 39 auf den Schaft 1 übertragen werden. Wie aus den Figuren ersichtlich ist, befindet sich die Abstützfläche 39, bezogen auf die Werkzeuglängsachse 2, im radial außen liegenden Bereich der Klemmbacke 27, das heißt im Bereich des äußeren Endes 24 des Schlitzes 23, so dass die Abstützung unmittelbar benachbart zum Backenteil 31 der Klemmbacke 27, also im Spannbereich der Schneidplatte 4, erfolgt.

## Patentansprüche

1. Bohrstange mit einem eine Werkzeuglängsachse (2) definierenden Schaft (1) und mit einem als Träger einer Schneidplatte (4) dienenden Kopf (3), mit an diesem und am Schaft (1) ausgebildeten Anlageflächen (9), mit einer Halteeinrichtung (5) zum lösbaren Andrücken der Anlageflächen (9) des Kopfes (3) an diejenigen des Schaftes (1), mit einer zum lösbaren Festlegen der Schneidplatte (4) dienenden Spanneinrichtung (29) mit einer Klemmbacke (27), die eine einen Teil der Anlageflächen des Kopfes (3) bildende Abstützfläche (39) aufweist, **dadurch gekennzeichnet, daß** die Abstützfläche (39) bei der Spann- und Freigabebewegung der Klemmbacke (27) an einer ihr zugekehrten Anlagefläche des Schaftes (1) geführt ist und eine Vertiefung (41) aufweist, die zur Verringerung der Größe der Berührungsfläche zwischen der zugeordneten Anlageflache des Schaftes (1) und der Abstützfläche (39) der Klemmbacke (27) in diese, an die Abstützfläche (39) angrenzend und die zugeordnete Anlagefläche des Schaftes (1) nicht berührend, eingearbeitet ist.

2. Bohrstange nach Anspruch 1, **dadurch gekennzeichnet, dass** die Klemmbacke (27) einstückig mit dem Kopf (3) ausgebildet und bereichsweise durch einen in diesem befindlichen Schlitz (23) begrenzt ist, dessen lichte Weite sich bei der Spann- und Freigabebewegung der Klemmbacke (27) ändert, und dass die der Abstützfläche (39) der Klemmbacke (27) zugewandte Mündung (25) des Schlitzes (23) innerhalb der Vertiefung (41) gelegen ist.

3. Bohrstange nach Anspruch 2, **dadurch gekennzeichnet, dass** die Klemmbacke (27) einen, bezogen auf die Werkzeuglängsachse (2), radial über das äußere Ende (24) des Schlitzes (23) vorspringenden Backenteil (31) aufweist und dass die Spanneinrichtung eine den Schlitz (23) in der Nähe von dessen äußerem Ende (24) durchgreifende Spannschraube (29) aufweist.

4. Bohrstange nach Anspruch 3, **dadurch gekennzeichnet, dass** die Abstützfläche (39) an der Klemmbacke (27), zur Spannschraube (29) benachbart, im Übergangsbereich zwischen äußerem Ende (24) des Schlitzes (23) und vorspringendem Backenteil (31) gelegen ist.

5. Bohrstange nach Anspruch 4, **dadurch gekennzeichnet, dass** die Abstützfläche (39) durch einen Teil der Vertiefung (41) von der in dieser gelegenen Mündung (25) des Schlitzes (23) getrennt ist.

6. Bohrstange nach Anspruch 5, **dadurch gekennzeichnet, dass** die Abstützfläche (39) an den von der Mündung (25) des Schlitzes (23) entfernten Rand der Klemmbacke (27) angrenzt.

7. Bohrstange nach Anspruch 6, **dadurch gekennzeichnet, dass** sich die Abstützfläche (39) nur längs eines Teilbereiches dieses Randes der Klemmbacke (27). erstreckt.

8. Bohrstange nach Anspruch 7, **dadurch gekennzeichnet, dass** sich die Vertiefung (41) längs des sich an die Abstützfläche (39) anschließenden Teils des Randes der Klemmbacke (27) bis zum Bereich des inneren Endes (26) des Schlitzes (23) erstreckt.

9. Bohrstange nach einem der Ansprüche 1 bis 8, **dadurch gekennzeichnet, dass** ein Teil der Anlageflächen (9, 11) des Kopfes (3), an einem, bezogen auf die Werkzeuglängsachse (2), axial vorspringenden Profilkörper (13) ausgebildet ist, der in einem am vorderen Ende des Schaftes (1) ausgebildeten Sitz (15) passend aufnehmbar und darin mittels der Halteeinrichtung (5) sicherbar ist.

10. Bohrstange nach Anspruch 9, **dadurch gekennzeichnet, dass** der Profilkörper (13) näherungsweise T-förmig ausgebildet und so angeordnet ist, dass sich ein Teil des Querbalkens (21) des T-Profils längs der die Vertiefung (41) der Klemmbacke (27) begrenzenden Mündung (25) des Schlitzes (23) erstreckt.

## Claims

1. Boring bar having a shank (1), defining a tool longitudinal axis (2), and having a head (3) serving as holder for a cutting tip (4), having bearing surfaces (9) formed on said head (3) and on the shank (1), having a retaining device (5) for releasably pressing the bearing surfaces (9) of the head (3) against those of the shank (1), having a clamping device (29) which serves to releasably fix the cutting tip (4) and has a gripping jaw (27) which has a supporting surface (39) forming part of the bearing surfaces of the head (3), **characterized in that** the supporting surface (39), during the clamping and release movement of the gripping jaw (27), is guided on a bearing surface, facing it, of the shank (1) and has a recess (41) which, for reducing the size of the contact area between the associated bearing surface of the shank (1) and the supporting surface (39) of the gripping jaw (27), is incorporated in the latter in such a way as to adjoin the supporting surface (39) and not touch the associated bearing surface of the shank (1).

2. Boring bar according to Claim 1, **characterized in that** the gripping jaw (27) is formed in one piece with the head (3) and a region thereof is defined by a slot (23) which is located in said head (3) and the clear width of which changes during the clamping and release movement of the gripping jaw (27), and **in that** that orifice (25) of the slot (23) which faces the supporting surface (39) of the gripping jaw (27) is situated within the recess (41).

3. Boring bar according to Claim 2, **characterized in that** the gripping jaw (27) has a jaw part (31) which, with respect to the tool longitudinal axis (2), projects radially beyond the outer end (24) of the slot (23), and **in that** the clamping device has a clamping screw (29) passing through the slot (23) in the vicinity of its outer end (24).

4. Boring bar according to Claim 3, **characterized in that** the supporting surface (39) on the gripping jaw (27) is situated, adjacent to the clamping screw (29), in the transition region between the outer end (24) of the slot (23) and the projecting jaw part (31).

5. Boring bar according to Claim 4, **characterized in that** the supporting surface (39) is separated by part of the recess (41) from that orifice (25) of the slot (23) which is situated in said recess (41).

6. Boring bar according to Claim 5, **characterized in that** the supporting surface (39) adjoins that edge of the gripping jaw (27) which is remote from the orifice (25) of the slot (23).

7. Boring bar according to Claim 6, **characterized in that** the supporting surface (39) extends only along a section of this edge of the gripping jaw (27).

8. Boring bar according to Claim 7, **characterized in that** the recess (41) extends up to the region of the inner end (26) of the slot (23) along that part of the edge of the gripping jaw (27) which adjoins the supporting surface (39).

9. Boring bar according to one of Claims 1 to 8, **characterized in that** part of the bearing surfaces (9, 11) of the head (3) is formed on a profile body (13) which projects axially with respect to the tool longitudinal axis (2) and which can be accommodated in a matching manner in a seat (15) formed on the front end of the shank (1) and can be secured therein by means of the retaining device (5).

10. Boring bar according to Claim 9, **characterized in that** the profile body (13) is of approximately T-shaped design and is arranged in such a way that part of the crossbeam (21) of the T profile extends along that orifice (25) of the slot (23) which defines the recess (41) of the gripping jaw (27).

## Revendications

1. Barre d'alésage avec une tige (1) définissant un axe longitudinal d'outil (2) et avec une tête (3) servant de support pour une plaque de coupe (4), avec des surfaces d'appui (9) réalisées sur la tête et sur la tige (1), avec un dispositif de retenue (5) pour presser de manière détachable les surfaces d'appui (9) de la tête (3) contre celles de la tige (1), avec un dispositif de serrage (29) servant à fixer de manière détachable la plaque de coupe (4), avec une mâchoire de serrage (27) qui présente une surface de support (39) formant une partie des surfaces d'appui de la tête (3), **caractérisée en ce que** la surface de support (39), lors du mouvement de serrage et de libération de la mâchoire de serrage (27), est guidée sur une surface d'appui de la tige (1) tournée vers elle et présente un renfoncement (41), qui est pratiqué pour réduire la taille de la surface de contact entre la surface d'appui associée de la tige (1) et la surface de support (39) de la mâchoire de serrage (27) dans celle-ci, en position adjacente à la surface de support (39) et sans contact avec la surface d'appui associée de la tige (1).

2. Barre d'alésage selon la revendication 1, **caractérisée en ce que** la mâchoire de serrage (27) est réalisée d'une seule pièce avec la tête (3) et est limitée en partie par une fente (23) située dans celle-ci, dont la largeur intérieure varie lors du mouvement de serrage et de libération de la mâchoire de serrage (27), et **en ce que** l'embouchure (25) de la fente (23), tournée vers la surface de support (39) de la mâchoire de serrage (27), est située à l'intérieur du renfoncement (41).

3. Barre d'alésage selon la revendication 2, **caractérisée en ce que** la mâchoire de serrage (27) présente une partie de mâchoire (31) saillant radialement par rapport à l'axe longitudinal de l'outil (2) au-delà de l'extrémité extérieure (24) de la fente (23), et **en ce que** le dispositif de serrage présente une vis de serrage (29) traversant la fente (23) à proximité de son extrémité extérieure (24).

4. Barre d'alésage selon la revendication 3, **caractérisée en ce que** la surface de support (39) sur la mâchoire de serrage (27), à côté de la vis de serrage (29), est située dans la région de transition entre l'extrémité extérieure (24) de la fente (23) et la partie de mâchoire saillante (31).

5. Barre d'alésage selon la revendication 4, **caractérisée en ce que** la surface de support (39) est séparée par une partie du renfoncement (41) de l'embouchure (25) de la fente (23) située dans celle-ci.

6. Barre d'alésage selon la revendication 5, **caractérisée en ce que** la surface de support (39) est adjacente au bord de la mâchoire de serrage (27) éloigné de l'embouchure (25) de la fente (23).

7. Barre d'alésage selon la revendication 6, **caractérisée en ce que** la surface de support (39) ne s'étend que le long d'une région partielle de ce bord de la mâchoire de serrage (27).

8. Barre d'alésage selon la revendication 7, **caractérisée en ce que** le renfoncement (41) s'étend le long de la partie du bord de la mâchoire de serrage (27) se raccordant à la surface de support (39), jusqu'à la région de l'extrémité intérieure (26) de la fente (23).

9. Barre d'alésage selon l'une quelconque des revendications 1 à 8, **caractérisée en ce qu'**une partie des surfaces d'appui (9, 11) de la tête (3) est réalisée sur un corps profilé (13) saillant axialement par rapport à l'axe longitudinal de l'outil (2), qui peut être reçu avec ajustement dans un siège (15) réalisé à l'extrémité avant de la tige (1) et qui peut être fixé dans ce siège au moyen du dispositif de retenue (5).

10. Barre d'alésage selon la revendication 9, **caractérisée en ce que** le corps profilé (13) α approximativement une forme en T et est disposé de telle sorte qu'une partie de la barre transversale (21) du profilé en T s'étende le long de l'embouchure (25) de la fente (23) limitant le renfoncement (41) de la mâchoire de serrage (27).
